# EUROPEAN PATENT APPLICATION

(11) **EP 4 645 519 A1**
(43) Date of publication of application: **05.11.2025**
(21) Application number: 24173885.5
(22) Date of filing: 02.05.2024
(51) Int. Cl.: H01M 10/48, H01M 10/613, H01M 10/625, H01M 10/643, H01M 10/6557, H01M 10/6567, H01M 10/6569, H01M 50/213, H01M 50/249, H01M 50/30

(54) **AN ENERGY STORAGE SYSTEM COMPRISING AT LEAST ONE BATTERY CELL**

(71) Applicant: VOLVO TRUCK CORPORATION, 405 08 Göteborg (SE)
(72) Inventor: Bhavani Shankar, Vijai Shankar, 414 78 Göteborg (SE)
(74) Representative: Valea AB

(57) **Abstract**

An energy storage system (4) comprising at least one battery cell (6) comprising a first end (8), a second end (10), and a central axis (c) extending therebetween. The energy storage system further comprises a base plate (12) comprising at least one cell holder (14). Each cell holder configured to hold the first end of one battery cell. The energy storage system further comprises a top plate (16), spaced from the base plate such that a first volume (18) is formed therebetween. The top plate comprising at least one sleeve (20). The energy storage system configured such that each sleeve extends along the central axis of one battery cell and is fluidly connected to the first volume, and wherein a capillary channel (22) is formed between each battery cell and each sleeve, the energy storage system being configured such that by supplying a liquid to the first volume, the liquid travels through each capillary channel via capillary action.

## Description

### TECHNICAL FIELD

The disclosure relates generally to an energy storage system. In particular aspects, the disclosure relates to an energy storage system comprising at least one battery cell. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

A problem exists that battery cells in an electrical storage system may generate heat and thus require cooling. In at least some examples a cooling liquid may be supplied to the battery cells such that heat may be extracted from the battery cells. Where a cooling liquid is supplied to the battery cells in at least some examples there may exist a problem that the heat extraction rate is insufficient. Furthermore, the design of the energy storage system may in some examples be overly complex. Therefore, there is a need to develop improved technology relating to such electrical storage systems.

### SUMMARY

According to a first aspect of the disclosure, an energy storage system comprising at least one battery cell is provided, wherein the at least one battery cell comprises a first end, a second end, and a central axis extending therebetween. The energy storage system has a first extension along a first axis, a second extension along a second axis and a third extension along a third axis, the first, second and third axes being perpendicular to each other. The energy storage system further comprises a base plate extending in the first axis and the third axis, and comprising at least one cell holder formed therein. Each of the at least one cell holder is configured to hold the first end of one of the at least one battery cell. The energy storage system further comprises a top plate, spaced from the base plate along the second axis such that a first volume is formed therebetween, the top plate comprising at least one sleeve. The energy storage system is configured such that the at least one sleeve extends along the central axis of the at least one battery cell and is fluidly connected to the first volume, and wherein a capillary channel is formed between the at least one battery cell and the at least one sleeve. The energy storage system is configured such that by supplying a liquid to the first volume, the liquid travels through the capillary channel via capillary action.

The first aspect of the disclosure may seek to provide an energy storage system whereby, in at least some examples, a heat extraction rate from the battery cells may be improved. A technical benefit may include that the cooling requirements of the battery cells may be met. Furthermore, in at least some examples, the complexity of the energy storage system may be reduced such that the manufacture of the energy storage system may be simplified.

In at least some examples, the first axis may refer to a longitudinal axis, the second axis a vertical axis, and the third axis a depth axis, wherein the vertical axis may coincide with a gravitational direction. In at least some examples, features may be formed on the base plate and/or the top plate, for example to guide a flow of liquid therebetween. Furthermore, in at least some examples, at least a portion of the base plate and/or the top plate may be inclined with respect to the first axis and/or the third axis, for example to guide the flow of liquid therebetween. In at least some examples, by holding the cell the cell holder restricts movement in at least one of the first axis, the second axis, or the third axis, or any combination thereof. In at least some examples, the energy storage system may comprise at least one additional element used in combination with the cell holder to ensure that the battery cells may be adequately held. In at least some examples, the entirety of the at least one sleeve extends into the second volume, alternatively, in at least some examples, at least a portion of the sleeve extends into the first volume. In at least some examples, the energy storage system may be configured for the supply of a liquid which may comprise a coolant. In at least some examples, the capillary channel is formed having an extension of 1 mm in the radial direction.

Optionally in some examples, including in at least one preferred example, the energy storage system comprises a first volume inlet configured to supply liquid to the first volume. A technical benefit may include that additional liquid may be supplied to the first volume, such that liquid which has been removed from the first volume may be replaced.

Optionally in some examples, including in at least one preferred example, the energy storage system comprises a fluid supply device, configured to supply liquid to the first volume via the first volume inlet. In at least some examples, the fluid supply device may comprise a pump. In at least some examples, the fluid supply device may be located at the first volume inlet, or alternatively at a first volume outlet (described below). A technical benefit may include that supply of additional liquid to the first volume may be controlled.

Optionally in some examples, including in at least one preferred example, the energy storage system comprises a first volume outlet, configured to remove liquid from the first volume. A technical benefit may include that liquid may be removed from the first volume, such that a liquid contained in the first volume may be replaced independent of the rate of the liquid passing through the capillary channel.

Optionally in some examples, including in at least one preferred example, the energy storage system comprises a housing, configured to enclose a second volume between the housing and the top plate, wherein the second volume is in fluid communication with the first volume via the capillary channel. In at least some examples, the housing may extend such that it encloses the first volume. In at least some examples, the housing comprises a single piece, alternatively the housing may comprise a plurality of pieces fixed to one another. In at least some examples, at least a portion of the housing may be integrated with the top plate and/or the base plate. A technical benefit may include that an evaporate formed by the liquid in the second volume may be prevented from escaping to the atmosphere. Furthermore, in at least some examples, the composition and/or the temperature of the second volume may be more easily controlled.

Optionally in some examples, including in at least one preferred example, the energy storage system comprises a second volume outlet, configured to remove gas from the second volume. In at least some examples, the gas may comprise a coolant vapour. A technical benefit may include that gas containing evaporate may be removed.

Optionally in some examples, including in at least one preferred example, the energy storage system comprises a fluid removal device, configured to remove gas from the second volume via the second volume outlet. A technical benefit may include that removal of gas containing evaporate may be controlled.

Optionally in some examples, including in at least one preferred example, the energy storage system comprises a second volume inlet, configured for the supply of gas to the second volume. A technical benefit may include that a gas contained in the second volume may be replaced such that an evaporation rate of the liquid may be improved. Furthermore, in at least some examples it may be possible to reverse the heat flow direction, such that the battery cells are heated.

Optionally in some examples, including in at least one preferred example, the energy storage system comprises at least one sensor configured to measure a parameter indicative of a temperature of the at least one battery cell, and wherein the energy storage system is configured to control a removal of gas from the second volume based on the parameter. A technical benefit may include that gas may be removed from the second volume based on an estimate of the evaporation rate of the liquid.

Optionally in some examples, including in at least one preferred example, the energy storage system comprises at least one sensor configured to measure a parameter indicative of a temperature of the at least one battery cell, and wherein the energy storage system is configured to control a supply of liquid to the first volume based on the parameter. A technical benefit may include that liquid may be supplied to the first volume based on an estimate of the evaporation rate of the liquid.

Optionally in some examples, including in at least one preferred example, the at least one cell holder is formed as a protrusion, configured to extend towards the top plate.

Optionally in some examples, including in at least one preferred example, the at least one cell holder is formed as a depression, configured to extend away from the top plate.

Optionally in some examples, including in at least one preferred example, the at least one battery cell is fixed in the at least one cell holder using an adhesive. A technical benefit may include that the battery cells may be more securely held in the cell holders.

Optionally in some examples, including in at least one preferred example, the at least one sleeve extends axially along the central axis of the at least one battery cell such that the at least one sleeve extends to a position, located between the first end and the second end of the at least one battery cell. In at least some examples the at least one sleeve extends from the top plate to the position, such that the extension of the at least one sleeve is at least 10% of the extension of battery cell along the central axis. Furthermore in at least some examples the at least one sleeve extends from the top plate to the position, such that the extension of the sleeve is at least 25%, 50%, 75% or even 75% of the extension of battery cell along the central axis.

Optionally in some examples, including in at least one preferred example, the at least one sleeve extends axially along the central axis of the at least one battery cell such that the at least one sleeve extends to the second end of the at least one battery cell.

Optionally in some examples, including in at least one preferred example, the at least one battery cell is a cylindrical battery cell.

According to a second aspect of the disclosure, a vehicle comprising the energy storage system according to any example of the first aspect of the disclosure is provided. The second aspect of the disclosure may seek to provide a vehicle having an energy storage system whereby a heat extraction rate from the battery cells may be improved. A technical benefit may include that the cooling requirements of the battery cells may be met. Furthermore, in at least some examples, the complexity of the energy storage system may be reduced such that the manufacture of the energy storage system may be simplified.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is an exemplary vehicle according to an example.
**FIG. 2a** is an exemplary energy storage system according to an example.
**FIG. 2b** is a top view of the energy storage system according to the example of **FIG. 2a****.**
**FIG. 3** is an exemplary energy storage system according to an example.
**FIG. 4** is another view of **FIG. 2a****,** according to an example.

The drawings are schematic and may not necessarily be drawn to scale. Like reference characters throughout the drawings refer to the same or similar element unless stated otherwise. Some reference characters in some of the drawings may have been omitted for the sake of clarity.

### DETAILED DESCRIPTION

The detailed description set forth below provides information and examples of the disclosed technology with sufficient detail to enable those skilled in the art to practice the disclosure.

Battery cells in an electrical storage system may generate heat and thus require cooling. In at least some examples, a cooling liquid may be supplied to the battery cells such that heat may be extracted from the battery cells. Where a cooling liquid is supplied to the battery cells the heat extraction rate may in some cases be insufficient. In at least some examples, a poor heat extraction rate may be caused by an uneven distribution of the cooling liquid.

Furthermore, the design of the energy storage system may in some examples be overly complex such that the energy storage system may be difficult to manufacture and/or service. The complexity of the energy storage system may be increased when providing a liquid cooling function. This is since it for example may be challenging to adequately seal the energy storage system.

Furthermore, it may be important that battery cells in an energy storage system are adequately held in place. For example, movement of the battery cells may cause breakage of an electrical connection.

Therefore, there is a need to develop improved technology relating to such energy storage systems.

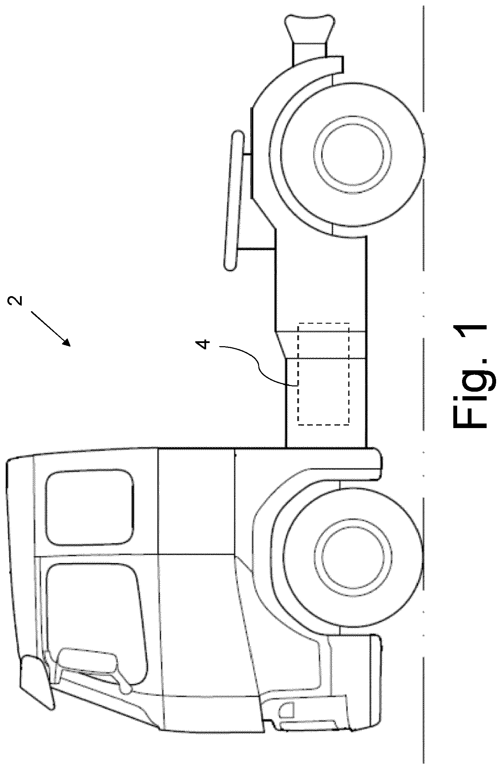

**FIG. 1** is an exemplary vehicle 2 according to an example, in the form of a truck 2. Whilst the shown aspect comprises a truck 2, the vehicle may comprise any type of vehicle such as a car, bus, industrial vehicle, marine vessel, aircraft, etc.

The vehicle 2 comprises an energy storage system 4. The energy storage system 4 may comprise an energy storage configured to be used for propulsion, for example in an electric vehicle. Alternatively, the energy storage system 4 may comprise an energy storage configured to be used for auxiliary functions of the vehicle 2.

Furthermore, the energy storage system 4 may be used for non-vehicle applications, for example a stationary installation.

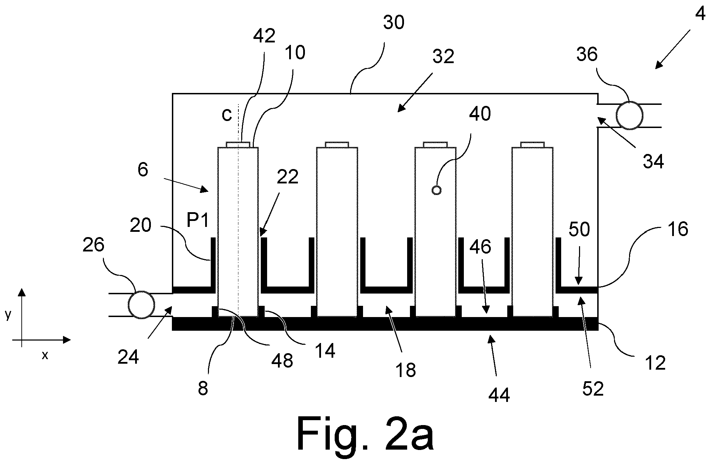

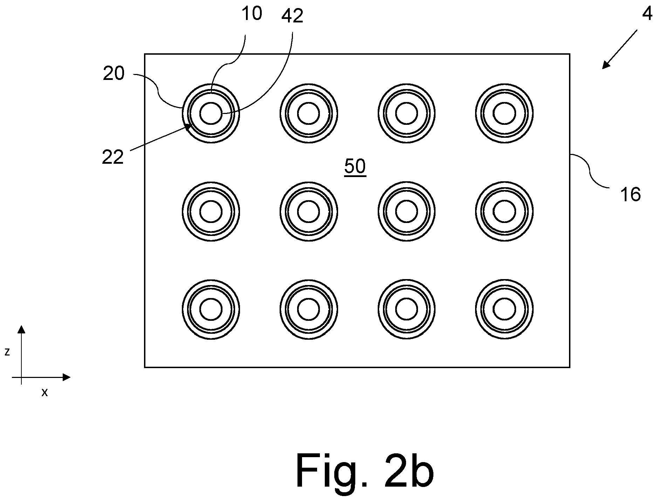

**FIG. 2a** is a schematic view of an exemplary energy storage system 4 according to an example. Additionally, **FIG. 2b** is a top view of the energy storage system 4 according to the example of **FIG. 2a****.** The energy storage system 4 comprises at least one battery cell 6. In the shown example the energy storage system 4 comprises twelve battery cells 6 arranged in three rows and four columns. The energy storage system 4 may comprise any number of battery cells 6, wherein the battery cells 6 may be arranged in any conceivable arrangement. In at least some examples, the battery cells 6 may be arranged in a single row/column or may be arranged in rows and/or columns which may be offset and/or overlap.

In the shown example, the at least one battery cell 6 is a cylindrical battery cell. In at least some examples the energy storage system 4 may comprise a prismatic cell, or any other type of battery cell. In the shown example, the at least one battery cell 6 comprises a first end 8, a second end 10, and a central axis c extending therebetween. In the shown example, the battery cells 6 comprises a battery terminal 42 located at the second end 10 thereof. In the shown example, the battery cells 6 may comprise a pair of terminals whereby a further terminal is located at the second end 10 of the battery cells 6 (not shown). In at least some examples, the battery cells 6 may comprise two terminals located at the first end 8 or the second end 10, of each battery cell 6. In at least some examples, where the battery cells 6 comprise a pair of terminals located on either end of the battery cells 6, the battery terminals located at the first end 8 of each of the battery cells 6 may have the same polarity, and the battery terminals 42 located at the second end 10 of each of the battery cells 6 may have the same polarity. The battery terminals 42 of multiple battery cells 6 may be connected via a bus bar, or the like (not shown).

The battery cells 6 may further comprise a vent (not shown), for the expulsion of waste gases from the battery cells 6. In at least some examples, the vent may be located at the second end 10 of the battery cells 6, alternatively the vent may be located at the first end 8 thereof.

The energy storage system 4 has a first extension along a first axis x, a second extension along a second axis y and a third extension along a third axis z, the first, second and third axes x, y, z being perpendicular to each other. In at least some examples, the first axis x may refer to a longitudinal axis, the second axis y a vertical axis, and the third axis z a depth axis, wherein the vertical axis y may coincide with a gravitational direction.

The energy storage system 4 further comprises a base plate 12 extending in the first axis x and the third axis z, and comprising at least one cell holder 14 formed therein. In the shown example, the base plate 12 comprises twelve cell holders 14, configured to hold the twelve battery cells 6. In at least some examples, at least a portion of the base plate 12 may be inclined with respect to the first axis x and/or the third axis z. In the shown example, the base plate 12 comprises a base outer face 44 and a base inner face 46 extending parallel to one another, orthogonal to the second axis. In at least some examples, the base outer face 44 may define an outer surface of the energy storage system 4. Alternatively, in at least some examples, the base outer face 44 may be fixed to an additional surface, for example of an outer housing, or a thermal transfer plate. In the shown example, the base plate 12 is formed as a solid plate. In at least some examples, the base plate 12 may be hollow, for example the base plate 12 may be formed having fluid channels to improve thermal dissipation.

The energy storage system 4 further comprises a top plate 16, spaced from the base plate 12 along the second axis y such that a first volume 18 is formed therebetween. In the shown example, the top plate 16 extends in the first axis x and the third axis z. In at least some examples, at least a portion of the top plate 16 may be inclined with respect to the first axis x and/or the third axis z.

In the shown example, the top plate 16 comprises a top outer face 50 and a top inner face 52 extending parallel to one another, orthogonal to the second axis. In at least some examples, the base inner face 46 and the top inner face 52 at least partially enclose the first volume 18. In the shown example the distance between the base inner face 46 and the top inner face 52 is constant. Alternatively, in at least some examples, the distance between the base inner face 46 and the top inner face 52 may vary, where the variation may be achieved by inclination of at least a portion of the base plate 12 and/or the top plate 16, and/or a variation in the thickness of the base plate 12 and/or the top plate 16. In at least some examples, a variation in the distance between the base inner face 46 and the top inner face 52 may improve a flow of liquid in the first volume 18.

In the shown example, each of the at least one cell holder 14 is configured to hold the first end 8 of one of the at least one battery cell 6. In at least some examples, the cell holder 14 may comprise an inner surface 46 formed complementary to the shape of the battery cells 6, in the shown example the inner surface 46 defines a cylindrical space. In at least some examples, the energy storage system 4 may comprise at least one additional element used in combination with the cell holder 14 to ensure that the battery cells 6 may be adequately held (not shown). For example, the additional element may comprise a spacer configured to be located between the battery cells 6 and the inner surface 46 of the cell holder 14, wherein the spacer may comprise for example an elastically deformable material such that the battery cells 6 may be easily inserted and held in place in the cell holders 12.

In the shown example, the at least one cell holder 14 is formed as a protrusion, configured to extend towards the top plate 16. Furthermore, in the shown example, the cell holder 14 is formed as a single protrusion continuously formed and configured to completely surround a portion of the battery cells 6. In at least some examples, the cell holder 14 may be discontinuous, for example the cell holder may comprise a number of elements formed in the base plate 12, having gaps formed therebetween. In at least some examples, the cell holder may only partially surround the battery cells 6, for example the cell holder 14 may be configured to extend only 180 degrees around the battery cell 6, or any amount thereof. Where the cell holder 14 is configured to only partially surround the battery cell 6, an additional element may be used to fix the battery cell 6 to the cell holder 14. In at least some examples, the battery cell 6 may be clamped to the cell holder 14 using an additional element fixed to the cell holder 14 and/or the base plate 12, or the battery cell 6 may be tied to the cell holder 14, or fixed by an elastic ring or the like, configured to surround both the battery cells 6 and the cell holders 14.

In at least some examples, the at least one battery cell 6 is fixed in the at least one cell holder 14 using an adhesive. In at least some examples, adhesive may be applied between the first end 8 of the battery cell 6 and the base plate 12 and/or the inner surface 48 of the cell holder 14 and the battery cell 6. In at least some examples, where the first end 8 of the battery cells 6 comprise at least one battery terminal, it may be advantageous for the adhesive to be applied between the inner surface 48 of the cell holders 14 and the battery cells 6. Alternatively, it may be possible to use an electrically conductive adhesive between the terminals and an electrically conductive element, such as a bus bar, configured to be electrically coupled thereto. The adhesive may be thermally insulating, or alternatively the adhesive may be thermally conductive. The use of thermally conductive adhesive may in at least some examples improve thermal communication between the battery cells 6 and a liquid in the first volume 18, and/or the battery cells 6 and fluid channels formed in the base plate 12, and/or an external thermal transfer plate.

The top plate 16 comprises at least one sleeve 20. Furthermore, in the shown example, the top plate 16 comprises twelve sleeves 20, configured for the twelve battery cells 6. In the shown example, the base plate 12 and the top plate 16 are configured such that the center of the sleeves 12 and cell holders 20 are coincident when viewed in the second axis, and the central axes c of the battery cells 6 are configured to extend therethrough.

The energy storage system 4 is configured such that the at least one sleeve 20 extends along the central axis c of the at least one battery cell 6 and is fluidly connected to the first volume 18, and a capillary channel 22 is formed between the at least one battery cell 6 and the at least one sleeve 20. The energy storage system 4 is configured such that by supplying a liquid to the first volume 18, the liquid travels through the capillary channel 22 via capillary action. In at least some examples, the capillary channel 22 is formed having an extension of 1 mm in the radial direction. In at least some examples, the liquid may comprise a coolant. In at least some examples, the liquid may comprise a coolant having an evaporation point complimentary to a working temperature of the battery cells 6.

In the shown example, sleeves 20 extend from the top outer face 50 of the top plate 16. In at least some examples, at least a portion of the sleeve 20 may extend from the top inner face 52 of the top plate 16 into the first volume 18.

In the shown example, the at least one sleeve 20 extends axially along the central axis c of the at least one battery cell 6 such that the at least one sleeve 20 extends to a position P1, located between the first end 8 and the second end 10 of the at least one battery cell 6. In at least some examples the at least one sleeve 20 extends from the top plate 16 to the position P 1, such that the extension of the at least one sleeve 20 is at least 10% of the extension of battery cell 6 along the central axis c. Furthermore in at least some examples the at least one sleeve 20 extends from the top plate 16 to the position P1, such that the extension of the sleeve 20 is at least 25%, 50%, 75% or even 75% of the extension of battery cell 6 along the central axis c.

In the shown example, the energy storage system further comprises a first volume inlet 24, configured to supply liquid to the first volume 18.

In the shown example, the energy storage system 4 further comprises a fluid supply device 26, configured to supply liquid to the first volume 18 via the first volume inlet 24. In at least some examples, the fluid supply device 26 may be controlled such that liquid is supplied to the first volume 18 at the same rate as liquid leaving the first volume 18, via the capillary channel 22. In at least some examples, the fluid supply device 26 may be controlled to generate an overpressure and/or an underpessure in the first volume 18.

In the shown example, the energy storage system 4 further comprises a housing 30, configured to enclose a second volume 32 between the housing 30 and the top plate 16. In the shown example, the second volume 32 is formed between the housing 30 and the top outer surface 50 of the top plate 16. In at least some examples, the housing 30 may at least partially form the first volume 18, wherein the first volume 18 may be defined between the top plate 16, the base plate 12, and the housing 30. The housing 30 may comprise a single piece, or alternatively the housing 30 may be formed as a plurality of pieces which may be fixed to one another, preferably sealingly fixed to one another. Furthermore, in at least some examples, the housing 30 may be fixed to the top plate 16 and/or the base plate 12, preferably sealing fixed, such as by adhesive, welding, fasteners, clamps, etc. Furthermore, in at least some examples, sealing members may be applied therebetween. In at least some examples, the housing may at least partially cover the base outer face 44 of the base plate 12.

In the shown example, the second volume 32 is in fluid communication with the first volume 18 via the capillary channel 22.

In the shown example, the energy storage system 4 further comprises a second volume outlet 34, configured to remove gas from the second volume 32. In at least some examples, the gas may comprise a coolant vapour, whereby the coolant vapour may be formed by the evaporation of a coolant having travelled from the first volume 18 via capillary action over a surface of the battery cell 6, and having evaporated due to a heat dissipated from the battery cell 6. Furthermore, in at least some examples, the gas may comprise waste gases vented from the battery cells 6. In at least some examples, the first volume inlet 24 and the second volume outlet 36 may be connected such that a loop is formed, wherein said loop may comprise pipes, reservoirs, thermal control elements such as condensers, further energy storage systems, inlets, outlets and the like.

In the shown example, the energy storage system 4 further comprises a fluid removal device 36, configured to remove gas from the second volume 32 via the second volume outlet 34. In at least some examples, the fluid removal device 36 may be controlled such that gas is removed from the second volume 32 at the same rate as vapour is formed in the second volume 32, wherein the vapour may be formed via the evaporation of a liquid having travelled through the capillary channel 22. In at least some examples, the fluid removal device 36 may be controlled to generate an overpressure and/or an underpessure in the second volume 32.

In at least some examples, the energy storage system 4 may comprise both the fluid supply device 26 and the fluid removal device 36. Alternatively, in at least some examples, the energy storage system 4 may comprise only the fluid supply device 26 or the fluid removal device 36, such that removal of gas from the second volume outlet 34 may be controlled by the fluid supply device 26, or supply of liquid through the first volume inlet 24 may be controlled by the fluid removal device 36.

Furthermore, in at least some examples, it may be possible to reverse the direction of flow through the first volume inlet 24 and/or the second volume outlet 34, for example, by controlling the fluid supply device 26 and/or the fluid removal device 36. In at least some examples the fluid supply device 26 and/or the fluid removal device 36 is/are a pump.

In at least some examples, the energy storage system 4 may comprise at least one sensor 40 configured to measure a parameter indicative of a temperature of the at least one battery cell 6. In at least some examples, the sensor 40 comprises a temperature sensor. Where the sensor 40 comprises a temperature sensor, at least one sensor 40 may be located in or on at least one of the battery cells 6, and/or an element in thermal communication with at least one of the battery cells 6. Furthermore, where the sensor 40 comprises a temperature sensor, at least one sensor 40 may be located in the first volume 18 and/or the second volume 32 and/or an element in thermal communication with at least the first volume 18 and/or the second volume 32. In at least some examples, the sensor 40 may be configured to measure an electrical discharge from at least one of the battery cells 6, or a parameter related to the electrical discharge of at least one of the battery cells 6. In at least some examples, the temperature of at least one of the battery cells 6 may be estimated therefrom. In at least some examples, the sensor 40 may be configured to measure a composition of the second volume 32 and/or a pressure in the first volume 18 and/or the second volume 32, In at least some examples, the temperature of at least one of the battery cells 6 may be estimated therefrom. In at least some examples, the energy storage system may comprise any number and or type of sensor, wherein measurements from said sensors may be combined, averaged, prioritized, or the like, such that the parameter indicative of the temperature of the at least one battery cell 6 may be ascertained.

In at least some examples, the energy storage system 4 is configured to control a removal of gas from the second volume 32 based on the parameter indicative of the temperature of the at least one battery cell 6. Additionally, or alternatively, in at least some examples, the energy storage system 4 is configured to control a supply of liquid to the first volume 18 based on the parameter indicative of the temperature of the at least one battery cell 6.

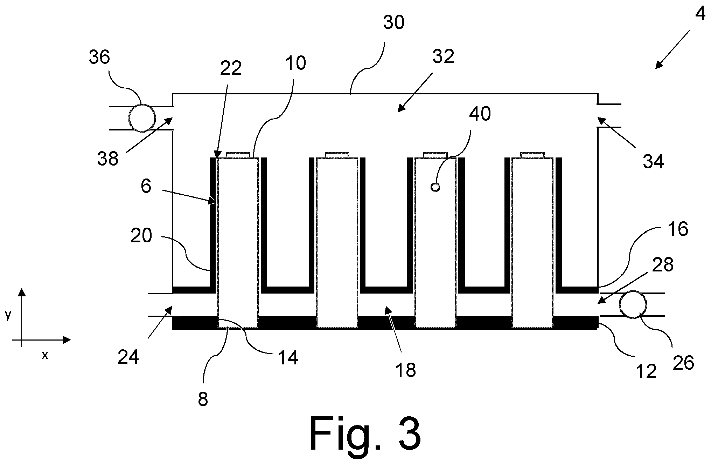

**FIG. 3** is an exemplary energy storage system 4 according to an example. The shown example differs from that of **FIG. 2a-2b** as the energy storage system 4 further comprises a first volume outlet 28, configured to remove liquid from the first volume 18. In the shown example, both the first volume inlet 24 and the first volume outlet 28 are formed between the top plate 16 and the base plate 12. In at least some examples, the first volume inlet 24 and/or the first volume outlet 28 may be formed through the base plate 12 and/or the top plate 16.

In at least some examples, the energy storage system 4 may comprise any number of first volume inlets 24 or first volume outlets 28. In at least some examples, the first volume inlet 24 and the first volume outlet 28 may be connected such that a loop is formed, wherein said loop may comprise pipes, reservoirs, thermal control elements, further energy storage systems, inlets, outlets and the like. By having both the first volume inlet 24 and the first volume outlet 28 a liquid contained in the first volume 18 may be replaced independent of the rate of the liquid passing through the capillary channel 22, such that for example, a temperature of the liquid contained in the first volume 18 may be reduced.

Furthermore, in the shown example, the fluid supply device 26 is located at the first volume outlet 28. In at least some examples, by controlling the removal of gas at the first volume outlet 28, the supply of liquid through the first volume inlet 24 may also be controlled. Furthermore, in at least some examples, it may be possible to reverse the heat flow direction, such that the battery cells 6 are heated, for example it may be possible to supply a liquid to the first volume 18 via the first volume inlet 24 and/or the first volume outlet 28 such that the battery cells 6 are heated.

In at least some examples, a number of fluid supply devices/fluid removal devices may be located at any number of first volume inlets 24 and/or first volume outlets 28.

Furthermore, the shown example differs from that of **FIG. 2a-2b** as the energy storage system 4 comprises a second volume inlet 38, configured for the supply of gas to the second volume 32. By having both the second volume inlet 38 and the second volume outlet 34, a gas contained in the second volume 32 may be replaced such that an evaporation rate of the liquid may be improved. Furthermore, in at least some examples, it may be possible to reverse the heat flow direction, such that the battery cells 6 are heated. For example, it may be possible to supply a gas to the second volume 32 via the second volume inlet 38 and/or the second volume outlet 34 such that the battery cells 6 are heated.

Furthermore, the shown example differs from that of **FIG. 2a-2b** as the at least one cell holder 14 is formed as a depression, configured to extend away from the top plate 16.

Furthermore, the shown example differs from that of **FIG. 2a-2b** as the at least one sleeve 20 extends axially along the central axis c of the at least one battery cell 6 such that the at least one sleeve 20 extends to the second end 10 of the at least one battery cell 6.

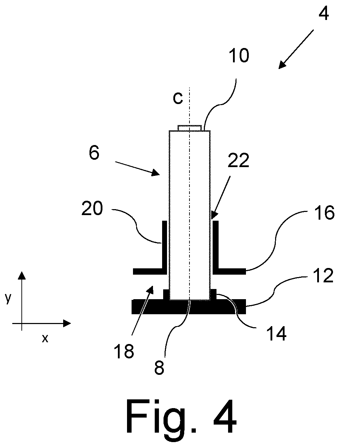

**FIG. 4** is another view of **FIG. 2a****,** according to an example. In the shown example, the at least one battery cell 6 comprises a first end 8, a second end 10, and a central axis c extending therebetween. The energy storage system 4 has a first extension along a first axis x, a second extension along a second axis y and a third extension along a third axis z, the first, second and third axes x, y, z being perpendicular to each other. The energy storage system 4 further comprises a base plate 12 extending in the first axis x and the third axis z, and comprising at least one cell holder 14 formed therein. Each of the at least one cell holder 14 is configured to hold the first end 8 of one of the at least one battery cell 6. The energy storage system 4 further comprises a top plate 16, spaced from the base plate 12 along the second axis y such that a first volume 18 is formed therebetween. The top plate 16 comprises at least one sleeve 20. The energy storage system 4 is configured such that the at least one sleeve 20 extends along the central axis c of the at least one battery cell 6 and is fluidly connected to the first volume 18, and wherein a capillary channel 22 is formed between the at least one battery cell 6 and the at least one sleeve 20. The energy storage system 4 is configured such that by supplying a liquid to the first volume 18, the liquid travels through the capillary channel 22 via capillary action.

In the following, possible features and feature combinations of the present disclosure are presented as a list of examples.

**Example 1:** an energy storage system 4 comprising at least one battery cell 6, wherein the at least one battery cell 6 comprises a first end 8, a second end 10, and a central axis c extending therebetween. The energy storage system 4 having a first extension along a first axis x, a second extension along a second axis y and a third extension along a third axis z, the first, second and third axes x, y, z being perpendicular to each other. The energy storage system 4 further comprises a base plate 12 extending in the first axis x and the third axis z, and comprising at least one cell holder 14 formed therein. Each of the at least one cell holder 14 is configured to hold the first end 8 of one of the at least one battery cell 6. The energy storage system 4 further comprises a top plate 16, spaced from the base plate 12 along the second axis y such that a first volume 18 is formed therebetween. The top plate 16 comprising at least one sleeve 20. The energy storage system 4 is configured such that the at least one sleeve 20 extends along the central axis c of the at least one battery cell 6 and is fluidly connected to the first volume 18, and wherein a capillary channel 22 is formed between the at least one battery cell 6 and the at least one sleeve 20, the energy storage system 4 being configured such that by supplying a liquid to the first volume 18, the liquid travels through the capillary channel 22 via capillary action.

**Example 2:** the energy storage system 4 of example 1, further comprising a first volume inlet 24, configured to supply liquid to the first volume 18.

**Example 3:** the energy storage system 4 of example 2, further comprising a fluid supply device 26, configured to supply liquid to the first volume 18 via the first volume inlet 24.

**Example 4:** the energy storage system 4 of example 3, further comprising a first volume outlet 28, configured to remove liquid from the first volume 18.

**Example 5:** the energy storage system 4 of any of the preceding examples, further comprising a housing 30, configured to enclose a second volume 32 between the housing 30 and the top plate 16, wherein the second volume 32 is in fluid communication with the first volume 18 via the capillary channel 22.

**Example 6:** the energy storage system 4 of example 5, further comprising a second volume outlet 34, configured to remove gas from the second volume 32.

**Example 7**: the energy storage system 4 of example 6, further comprising a fluid removal device 36, configured to remove gas from the second volume 32 via the second volume outlet 34.

**Example 8:** the energy storage system 4 of any of examples 5-6, further comprising a second volume inlet 38, configured for the supply of gas to the second volume 32.

**Example 9:** the energy storage system 4 of any of examples 5-8, comprising at least one sensor 40 configured to measure a parameter indicative of a temperature of the at least one battery cell 6, and wherein the energy storage system 4 is configured to control a removal of gas from the second volume 32 based on the parameter.

**Example 10:** the energy storage system 4 of any of the preceding examples, comprising at least one sensor 40 configured to measure a parameter indicative of a temperature of the at least one battery cell 6, and wherein the energy storage system 4 is configured to control a supply of liquid to the first volume 18 based on the parameter.

**Example 11:** the energy storage system 4 of any of the preceding examples, wherein the at least one cell holder 14 is formed as a protrusion, configured to extend towards the top plate 16.

**Example 12:** the energy storage system 4 of any of examples 1-10, wherein the at least one cell holder 14 is formed as a depression, configured to extend away from the top plate 16.

**Example 13:** the energy storage system 4 of any of the preceding examples, wherein the at least one battery cell 6 is fixed in the at least one cell holder 14 using an adhesive.

**Example 14:** the energy storage system 4 of any of the preceding examples, wherein the at least one sleeve 20 extends axially along the central axis c of the at least one battery cell 6 such that the at least one sleeve 20 extends to a position P1, located between the first end 8 and the second end 10 of the at least one battery cell 6.

**Example 15:** the energy storage system 4 of any of examples 1-13, wherein the at least one sleeve 20 extends axially along the central axis c of the at least one battery cell 6 such that the at least one sleeve 20 extends to the second end 10 of the at least one battery cell 6.

**Example 16:** the energy storage system 4 of any of the preceding claims, wherein the at least one battery cell 6 is a cylindrical battery cell.

**Example 17:** a vehicle 2 comprising the energy storage system 4 according to any of examples 1-16.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. An energy storage system (4) comprising at least one battery cell (6), wherein said at least one battery cell (6) comprises a first end (8), a second end (10), and a central axis (c) extending therebetween, said energy storage system (4) having a first extension along a first axis (x), a second extension along a second axis (y) and a third extension along a third axis (z), said first, second and third axes (x, y, z) being perpendicular to each other, wherein the energy storage system (4) further comprises:
- a base plate (12) extending in said first axis (x) and said third axis (z), and comprising at least one cell holder (14) formed therein, wherein each of said at least one cell holder (14) is configured to hold the first end (8) of one of said at least one battery cell (6),
- a top plate (16), spaced from said base plate (12) along said second axis (y) such that a first volume (18) is formed therebetween, the top plate (16) comprising at least one sleeve (20), wherein the energy storage system (4) is configured such that said at least one sleeve (20) extends along the central axis (c) of said at least one battery cell (6) and is fluidly connected to the first volume (18), and wherein a capillary channel (22) is formed between said at least one battery cell (6) and said at least one sleeve (20), the energy storage system (4) being configured such that by supplying a liquid to said first volume (18), said liquid travels through said capillary channel (22) via capillary action.

2. The energy storage system (4) of claim 1, further comprising a first volume inlet (24), configured to supply liquid to said first volume (18).

3. The energy storage system (4) of claim 2, further comprising a fluid supply device (26), configured to supply liquid to said first volume (18) via said first volume inlet (24).

4. The energy storage system (4) of claim 3, further comprising a first volume outlet (28), configured to remove liquid from said first volume (18).

5. The energy storage system (4) of any of the preceding claims, further comprising a housing (30), configured to enclose a second volume (32) between said housing (30) and said top plate (16), wherein said second volume (32) is in fluid communication with said first volume (18) via said capillary channel (22).

6. The energy storage system (4) of claim 5, further comprising a second volume outlet (34), configured to remove gas from said second volume (32).

7. The energy storage system (4) of claim 6, further comprising a fluid removal device (36), configured to remove gas from said second volume (32) via said second volume outlet (34).

8. The energy storage system (4) of any of claims 5-6, further comprising a second volume inlet (38), configured for the supply of gas to said second volume (32).

9. The energy storage system (4) of any of claims 5-8, comprising at least one sensor (40) configured to measure a parameter indicative of a temperature of said at least one battery cell (6), and wherein the energy storage system (4) is configured to control a removal of gas from said second volume (32) based on said parameter.

10. The energy storage system (4) of any of the preceding claims, comprising at least one sensor (40) configured to measure a parameter indicative of a temperature of said at least one battery cell (6), and wherein the energy storage system (4) is configured to control a supply of liquid to said first volume (18) based on said parameter.

11. The energy storage system (4) of any of the preceding claims, wherein the at least one cell holder (14) is formed as a protrusion, configured to extend towards said top plate (16).

12. The energy storage system (4) of any of claims 1-10, wherein the at least one cell holder (14) is formed as a depression, configured to extend away from said top plate (16).

13. The energy storage system (4) of any of the preceding claims, wherein the at least one sleeve (20) extends axially along said central axis (c) of said at least one battery cell (6) such that said at least one sleeve (20) extends to a position (P1), located between said first end (8) and said second end (10) of said at least one battery cell (6).

14. The energy storage system (4) of any of claims 1-12, wherein the at least one sleeve (20) extends axially along said central axis (c) of said at least one battery cell (6) such that said at least one sleeve (20) extends to said second end (10) of said at least one battery cell (6).

15. A vehicle (2) comprising the energy storage system (4) according to any of claims 1-14.
